# EUROPÄISCHE PATENTSCHRIFT

(11) **EP 1 477 641 B1**
(45) Veröffentlichungstag und Bekanntmachung des Hinweises auf die Patenterteilung: **09.08.2006**
(21) Anmeldenummer: 04006901.5
(22) Anmeldetag: 23.03.2004
(51) Int. Cl.: F01M 13/04

(54) **Vorrichtung zur Abscheidung von Flüssigkeit aus einem Gasstrom**
Device for separating fluids from a gas stream
Dispositif de separation du fluide a partit d'un flot de gas

(30) Priorität: 15.05.2003 DE 10321866
(43) Veröffentlichungstag der Anmeldung: 17.11.2004
(73) Patentinhaber: ROBERT BOSCH GMBH, 70442 Stuttgart (DE)
(72) Erfinder: Hezel, Bruno, 70565 Stuttgart (DE)

(56) Entgegenhaltungen:
- WO-A-00/27539
- DE-A- 2 331 784
- DE-A- 10 127 817
- US-A- 4 147 630

## Beschreibung

### Stand der Technik

Die Erfindung geht aus von einer Vorrichtung zur Abscheidung von Flüssigkeit aus einem Gasstrom nach der Gattung des Hauptanspruchs.
Es ist schon eine Vorrichtung zur Abscheidung von Flüssigkeit aus der DE 101 27 817 A1 bekannt, mit der Öl aus einem sogenannten Blowby-Gas einer Kurbelgehäuseentlüftung abgeschieden wird. Diese Vorrichtung besteht aus einem Vorabscheider, einem Grobabscheider, einem Feinabscheider und einem Druckregelventil. Als Grobabscheider wird eine Wendel mit einem schraubenlinienförmigen Strömungskanal verwendet. Die Abscheidewirkung von Wendeln ist bei einer vorbestimmten Strömungsgeschwindigkeit optimal. Daher werden Wendeln für eine vorbestimmte Strömungsgeschwindigkeit und einen entsprechenden vorbestimmten Volumenstrom ausgelegt. Da der Volumenstrom des Blowby-Gases beim Betrieb einer Brennkraftmaschine schwankt, weicht die Strömungsgeschwindigkeit in der Wendel oft von der vorbestimmten Strömungsgeschwindigkeit ab, so daß die optimale Abscheidewirkung in vielen Betriebszuständen nicht erreicht wird.

### Vorteile der Erfindung

Die erfindungsgemäße Vorrichtung mit den kennzeichnenden Merkmalen des Hauptanspruchs hat demgegenüber den Vorteil, daß auf einfache Art und Weise eine Verbesserung der Abscheidewirkung erzielt wird, indem der Strömungsquerschnitt des schraubenlinienförmigen Strömungskanals der Wendel mittels eines in dem Strömungskanal angeordneten Volumenänderungselements stufenlos derart verstellbar ist, daß die vorbestimmte Strömungsgeschwindigkeit in dem Strömungskanal der Wendel in nahezu allen Betriebszuständen der Brennkraftmaschine zumindest annähernd erreicht wird. Der Strömungsquerschnitt der Wendel wird durch eine Volumenänderung des Volumenänderungselements jeweils an den Blowby-Gas-Volumenstrom angepaßt.

Durch die in den Unteransprüchen aufgeführten Maßnahmen sind vorteilhafte Weiterbildungen und Verbesserungen der im Hauptanspruch angegebenen Vorrichtung möglich.

Besonders vorteilhaft ist, wenn die Vorrichtung ein Druckregelventil aufweist und eine Motorsteuerung das Druckregelventil derart ansteuert, dass sich ein vorbestimmter Druck im Strömungskanal und durch die dadurch bewirkte Anpassung des Volumenänderungselements ein vorbestimmter Strömungsquerschnitt des Strömungskanals einstellt. Das Volumen des Volumenänderungselements wird mittels des durch das Druckregelventil eingestellten Druckes an den Volumenstrom des Gases angepaßt, so daß sich in annähernd allen Betriebszuständen die vorbestimmte Strömungsgeschwindigkeit im Strömungskanal ergibt.

Weiterhin vorteilhaft ist, das Volumenänderungselement im Strömungskanal an einem Innenzylinder der Wendel oder am Innenumfang eines topfförmigen Gehäuseteils anzuordnen.

Darüber hinaus vorteilhaft ist, wenn das Volumenänderungselement eine Hohlstruktur mit geschlossenen Poren aufweist, da auf diese Weise eine druckabhängige Verstellung des Strömungsquerschnitts des Strömungskanals möglich ist.
Das Volumenänderungselement verändert sein Volumen abhängig vom Druck im Strömungskanal und stellt auf diese Weise einen vorbestimmten Strömungsquerschnitt im Strömungskanal ein. Das Volumenänderungselement verkleinert sein Volumen bei einem steigenden Druck im Strömungskanal und vergrößert es bei einem sinkenden Druck im Strömungskanal.

Außerdem vorteilhaft ist, wenn das Volumenänderungselement als aufblasbarer, elastischer Hohlkörper, beispielsweise Schlauch, mit einem externen Luftanschluss ausgeführt ist, da der Querschnitt des Strömungskanals auf diese Weise unabhängig vom Druck im Strömungskanal verstellt werden kann.

Weiterhin vorteilhaft ist, wenn der externe Luftanschluss mit einem Ansaugrohr der Brennkraftmaschine, mit einer Saugseite eines Turboladers oder mit der Atmosphäre verbunden ist, da auf diese Weise ein Unterdruck im Ansaugrohr oder ein Unterdruck auf der Saugseite des Turboladers zur Volumenverkleinerung des Volumenänderungselements und ein Überdruck im Ansaugrohr zur Volumenvergrößerung des Volumenänderungselements nutzbar ist.

Sehr vorteilhaft ist es, wenn das Volumenänderungselement aus Gummi hergestellt.

### Zeichnung

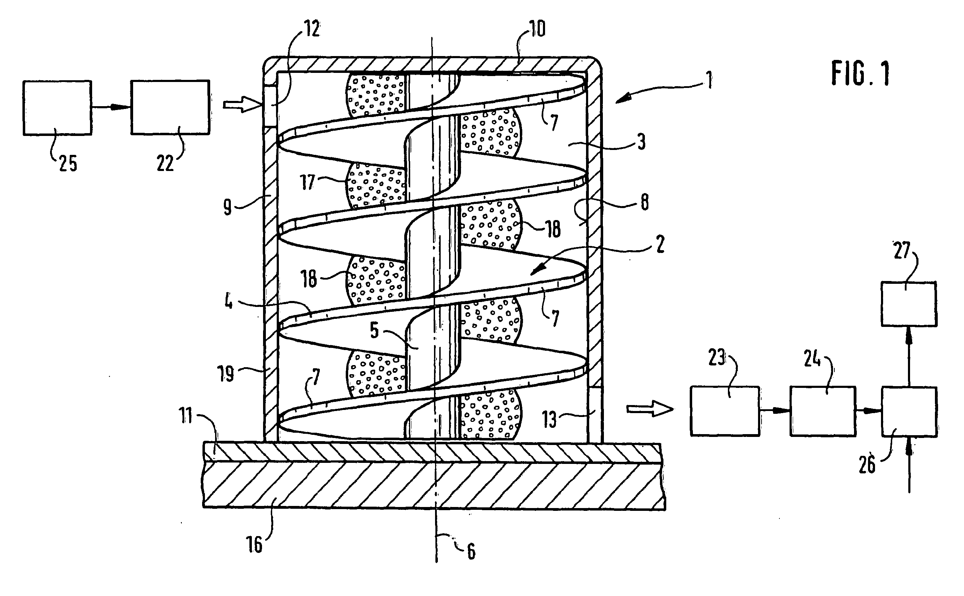

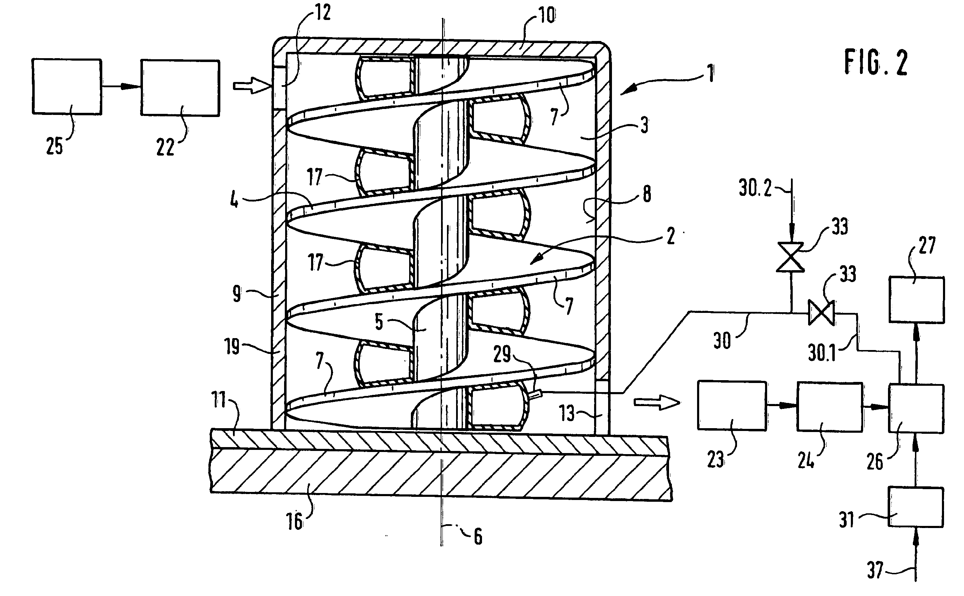

Zwei Ausführungsbeispiele der Erfindung sind in der Zeichnung vereinfacht dargestellt und in der nachfolgenden Beschreibung näher erläutert. Fig.1 zeigt eine erfindungsgemäße Vorrichtung mit einer Wendel gemäß einem ersten Ausführungsbeispiel und Fig.2 eine erfindungsgemäße Vorrichtung gemäß einem zweiten Ausführungsbeispiel.

### Beschreibung der Ausführungsbeispiele

Fig.1 zeigt eine erfindungsgemäße Vorrichtung mit einer Wendel gemäß einem ersten Ausführungsbeispiel. Die erfindungsgemäße Vorrichtung dient vorzugsweise zum Abscheiden von Flüssigkeiten, insbesondere Öl, aus einem Gasstrom. Sie kann allgemein zum Abscheiden von Tropfen von Flüssigkeiten aus strömenden Gasen verwendet werden. Die erfindungsgemäße Vorrichtung wird vorzugsweise eingesetzt in einer Kurbelgehäuseentlüftung einer Brennkraftmaschine.

Eine Vorrichtung zur Kurbelgehäuseentlüftung ist beispielsweise aus der DE 101 27 820 A1 bekannt.

Während eines Betriebs der Brennkraftmaschine strömt aufgrund einer kleinen Leckage zwischen einem Kolben, Kolbenringen und Zylinderlaufflächen ein Gas aus einem Verbrennungsraum in ein sogenanntes Kurbelgehäuse. Dieses Gas wird als Blowby-Gas bezeichnet. Im Folgenden wird für das Blowby-Gas allgemein der Begriff Gas verwendet. Durch die kleine Leckage von Gas aus dem Verbrennungsraum der Brennkraftmaschine kommt es zu einer unzulässigen Druckerhöhung in dem Kurbelgehäuse, so daß es notwendig ist, einen Druckausgleich durch die sogenannte Kurbelgehäuseentlüftung zu erreichen. Da das Gas eine hohe Kohlenwasserstoff-Konzentration aufweist, wird das Gas nicht in die Atmosphäre, sondern in ein Ansaugrohr der Brennkraftmaschine geleitet, damit es dort einer Verbrennung zugeführt wird. In dem Kurbelgehäuse entsteht durch das mit hoher Strömungsgeschwindigkeit einströmende Gas und durch die bewegten Teile in dem Kurbelgehäuse ein Ölnebel mit vielen kleinen und großen Öltropfen. Diese Öltropfen müssen bei der Kurbelgehäuseentlüftung mit Hilfe einer Vorrichtung zur Abscheidung von Flüssigkeit aus dem Gasstrom abgeschieden werden, um einen hohen Ölverlust zu vermeiden und um die Verbrennung nicht zu beeinträchtigen.

Die erfindungsgemäße Vorrichtung hat ein Gehäuse 1, in dem zumindest eine Wendel 2 mit einem schraubenlinienförmigen Strömungskanal 3 und einem Wendelprofil 4 vorgesehen ist. Das Wendelprofil 4 verläuft schraubenlinienförmig um einen Innenzylinder 5 mit einer Achse 6. Der Innenzylinder 5 kann einteilig oder mehrteilig an dem Wendelprofil 4 vorgesehen sein. Das Wendelprofil 4 liegt im wesentlichen dicht an dem Innenzylinder 5 an. Das Wendelprofil 4 und damit der Strömungskanal 3 haben beispielsweise mehrere Windungen 7.

Das Gehäuse 1 kann neben der zumindest einen Wendel 2 weitere Abscheideelemente, wie beispielsweise einen stromauf der Wendel 2 angeordneten Vorabscheider 22 und einen stromab der Wendel 2 angeordneten Feinabscheider 23, und ein Druckregelventil 24 aufweisen. Eine Vorrichtung bestehend aus einem Vorabscheider, einer Wendel als Grobabscheider, einem Feinabscheider und einem Druckregelventil ist beispielsweise in der DE 101 27 820 A1 gezeigt. In dem Vorabscheider 22 werden durch eine Umlenkung des Gases sehr große Flüssigkeitstropfen, in dem Feinabscheider 23, beispielsweise ein Filter bestehend aus einem Vlies oder einem Garnwickel, kleine Flüssigkeitstropfen aus dem Gas entfernt. Das Druckregelventil 24 dient dazu, einen vorbestimmten Druck in der Vorrichtung einzustellen.

Das Gehäuse 1 ist beispielsweise mehrteilig ausgebildet. Die Wendeln 2 sind jeweils in einem topfförmigen Gehäuseteil 9 des Gehäuses 1 angeordnet. Ein Innenumfang 8 des topfförmigen Gehäuseteils 9 liegt im wesentlichen dicht am Umfang des Wendelprofils 4 an. Der schraubenlinienförmig verlaufende Strömungskanal 3 wird daher von dem Wendelprofil 4, dem Innenumfang 8 des topfförmigen Gehäuseteils 9 und dem Innenzylinder 5 begrenzt bzw. gebildet.

Der Innenzylinder 5 liegt mit einer Stirnseite an einem Boden 10 des topfförmigen Gehäuseteils 9 und mit einer anderen Stirnseite an einem dem Boden 10 gegenüberliegenden Bodenteil 11 des Gehäuse 1 an.

Das topfförmige Gehäuseteil 9 hat einen Eingangskanal 12 und und mit axialem Abstand dazu einen Ausgangskanal 13. Der Eingangskanal 12 und der Ausgangskanal 13 sind beispielsweise am Umfang des topfförmigen Gehäuseteils 9 angeordnet. Der Eingangskanal 12 ist an dem der Wendel 2 zugewandten Ende mit dem Strömungskanal 3 und an dem der Wendel 2 abgewandten Ende beispielsweise mit dem Vorabscheider 22 und zumindest mittelbar mit einem Kurbelgehäuse 25 verbunden. Der Ausgangskanal 13 ist an dem der Wendel 2 zugewandten Ende mit dem Strömungskanal 3 und an dem der Wendel 2 abgewandten Ende beispielsweise mit dem Feinabscheider 23 und zumindest mittelbar mit einem sogenannten Ansaugrohr 26 einer Brennkraftmaschine 27 verbunden.

Das Gehäuse 1 ist beispielsweise an einer Zylinderkopfhaube 16 befestigt, die hier nur andeutungsweise dargestellt ist.

Erfindungsgemäß ist in dem Strömungskanal 3 ein Volumenänderungselement 17 vorgesehen, das einen Teil des Strömungsquerschnitts zwischen dem Innenzylinder 5 und einer Wandung 19 mit dem Innenumfang 8 des topfförmigen Gehäuseteils 9 einnimmt und den Strömungsquerschnitt abhängig von einem Druck im Strömungskanal 3 stufenlos derart verändert, daß die sich aus dem Quotienten von Volumenstrom und Strömungsquerschnitt ergebende Strömungsgeschwindigkeit im Strömungskanal 3 in möglichst allen Betriebszuständen der Brennkraftmaschine zumindest annähernd im Bereich der vorbestimmten Strömungsgeschwindigkeit liegt. Das Volumenänderungselement 17 verläuft im Strömungskanal 3 über zumindest einen Teil der Längserstreckung des Strömungskanals 3 und ist beispielsweise am Umfang des Innenzylinders 5, an dem Innenumfang 8 des topfförmigen Gehäuseteils 9 oder in einer Zwischenstellung zwischen dem Innenzylinder 5 und dem topfförmigen Gehäuseteil 9 angeordnet. Das Volumenänderungselement 17 liegt in Richtung der Achse 6 an dem Wendelprofil 4 an und ist beispielsweise schraubenlinienförmig in den Strömungskanal 3 eingelegt.

Das Volumenänderungselement 17 weist beispielsweise eine Hohlstruktur mit geschlossenen Poren 18 auf und verändert dadurch sein Volumen in Abhängigkeit von dem Druck im Strömungskanal 3. Bei steigendem Druck im Strömungskanal 3 wird die Hohlstruktur des Volumenänderungselements 17 in radialer Richtung zusammengedrückt, so daß sich der Strömungsquerschnitt des Strömungskanals 3 vergrößert. Bei sinkendem Druck im Strömungskanal 3 dehnt sich die Hohlstruktur des Volumenänderungselements 17 dagegen in radialer Richtung aus, so daß sich der Strömungsquerschnitt des Strömungskanals 3 verkleinert. Auf diese Weise stellt sich jeweils ein Kräftegleichgewicht zwischen dem auf das Volumenänderungselement 17 wirkenden Druck des Strömungskanals 3 und einer elastischen Rückstellkraft des Volumenänderungselements 17 ein.

Die Verstellung des auf das Volumenänderungselement 17 wirkenden Druckes erfolgt beispielsweise durch das Druckregelventil 24, das mit dem Ansaugrohr 26 der Brennkraftmaschine verbunden ist und von einer elektronischen Motorsteuerung derart angesteuert wird, daß sich ein Druck im Strömungskanal 3 ergibt, der auf das Volumenänderungselement 17 derart wirkt, daß er eine Form einnimmt, durch die sich ein für die vorbestimmte Strömungsgeschwindigkeit erforderlicher Strömungsquerschnitt im Strömungskanal 3 einstellt.

Die erfindungsgemäße Vorrichtung ist beispielsweise über einen Ansaugkanal mit dem sogenannten Ansaugrohr 26 der Brennkraftmaschine verbunden. Im Ansaugrohr 26 der Brennkraftmaschine besteht ein vom Betriebszustand der Brennkraftmaschine abhängiger Druck, der sich, vermindert um einen Druckverlust, bis in die erfindungsgemäße Vorrichtung ausbreitet. Mittels des Druckregelventils 24 kann der Druckverlust verändert werden, so daß variable Drücke in der Vorrichtung und damit im Strömungskanal 3 der Wendel 2 einstellbar sind.

In der elektronischen Motorsteuerung ist beispielsweise eine Korrelation zwischen dem Druck im Strömungskanal 3 und dem sich daraus ergebenden Strömungsquerschnitt in der Wendel 2 abgespeichert. Das Druckregelventil 24 wird von der Motorsteuerung beispielsweise weiter öffnend angesteuert, um in dem Strömungskanal 3 der Wendel 2 einen geringeren Druck zu erzeugen, der eine Ausdehnung des Volumenänderungselements 17 bewirkt und auf diese Weise den Strömungsquerschnitt des Strömungskanals 3 verkleinert. Umgekehrt wird das Druckregelventil 24 von der Motorsteuerung weiter schließend angesteuert, um in dem Strömungskanal 3 der Wendel 2 einen höheren Druck zu erzeugen, so daß sich das Volumen des Volumenänderungselements 17 verkleinert und auf diese Weise den Strömungsquerschnitt des Strömungskanals 3 erweitert.

Zumindest in einigen Betriebszuständen der Brennkraftmaschine ist es möglich, das Volumenänderungselement 17 ohne das Erzeugen von zusätzlichem Druckverlust durch die Druckbeeinflussung mittels des Druckregelventils 24 zu verstellen. Gemäß dieser Ausführung verstellt der Druck im Ansaugrohr 26 unmittelbar das Volumenänderungselement 17.

Das Gas aus dem Kurbelgehäuse 25 strömt in die erfindungsgemäße Vorrichtung und gelangt zumindest mittelbar über den Eingangskanal 12 in das topfförmige Gehäuseteil 9, durchströmt den schraubenlinienförmigen Strömungskanal 3 der Wendel 2 über die mehreren Windungen 7 und verläßt das topfförmige Gehäuseteil 9 wieder über den Ausgangskanal 13.

In dem Gas enthaltene Flüssigkeit, beispielsweise in Form von Tropfen, bewegt sich im Strömungskanal 3 aufgrund ihrer Trägheit radial nach außen. Ausreichend große Tropfen treffen schließlich auf eine den Strömungskanal 3 nach radial außen begrenzende äußere Kanalwandung und laufen an der Kanalwandung in Richtung der Schwerkraft hinab. Die Flüssigkeit ist auf diese Weise aus dem Gas abgeschieden und fließt entlang des Wendelprofils 4 in Richtung der Schwerkraft. Die den Strömungskanal 3 nach radial außen begrenzende Kanalwandung des Strömungskanals 3 ist beispielsweise Teil des Volumenänderungselements 17, wenn das Volumenänderungselement 17 an der Wandung 19 des topfförmigen Gehäuseteils 9 angeordnet ist. Wenn das Volumenänderungselement 17 am Innenzylinder 5 angeordnet ist, ist die äußere Kanalwandung der Innenumfang 8 der Wandung 19 des topfförmigen Gehäuseteils 9.

Die abgeschiedene Flüssigkeit sammelt sich am Bodenteil 11 und gelangt über einen nicht dargestellten Rücklaufkanal in das Kurbelgehäuse 25. Der Rücklaufkanal kann im Bodenteil 11 des Gehäuses 1 innerhalb des topfförmigen Gehäuseteils 9 oder außerhalb des topfförmigen Gehäuseteils 9 stromab des Ausgangskanals 13 vorgesehen sein.

In der Wendel 2 nicht abgeschiedene Flüssigkeit verläßt das topfförmige Gehäuseteil 9 zusammen mit dem Gasstrom über den Ausgangskanal 13 und wird beispielsweise im nachfolgenden Feinabscheider 23 abgeschieden.

Die Abscheidewirkung der Wendel 2 ist bei einer vorbestimmten Strömungsgeschwindigkeit im Strömungskanal 3 optimal. Daher werden Wendeln für eine vorbestimmte Strömungsgeschwindigkeit und einem entsprechenden vorbestimmten Volumenstrom ausgelegt. Durch das Schwanken des Volumenstroms des Gases während des Betriebs der Brennkraftmaschine, abhängig von der Bauart zwischen 30 und 150 Litern pro Minute, schwankt beim Stand der Technik auch die Strömungsgeschwindigkeit im Strömungskanal 3 und weicht dadurch häufig unterschiedlich stark von der vorbestimmten Strömungsgeschwindigkeit ab, so daß die optimale Abscheidewirkung selten voll ausgenutzt wird. Durch das Verstellen des Strömungsquerschnitts des Strömungskanals 3 mittels des Volumenänderungselements 17 wird die vorbestimmte Strömungsgeschwindigkeit in nahezu allen Betriebszuständen zumindest annähernd erreicht und die Abscheidewirkung dadurch konstant und optimal gehalten.

Fig.2 zeigt eine erfindungsgemäße Vorrichtung gemäß einem zweiten Ausführungsbeispiel. Bei der Vorrichtung nach Fig.2 sind die gegenüber der Vorrichtung nach Fig.1 gleichbleibenden oder gleichwirkenden Teile durch die gleichen Bezugszeichen gekennzeichnet.

Die Vorrichtung nach Fig.2 unterscheidet sich von der Vorrichtung nach Fig.1 darin, daß das Volumenänderungselement 17 nicht mittelbar durch den Druck im Strömungskanal 3, sondern unmittelbar durch einen externen Luftanschluß verstellbar ist.

Das Volumenänderungselement 17 ist in einer zweiten Ausführung als aufblasbarer, elastischer Hohlkörper, beispielsweise als Schlauch mit einem externen Luftanschluß 29, ausgebildet. Das Volumenänderungselement 17 ist über den Luftanschluß 29 belüftbar und entlüftbar, so daß sich das Volumenänderungselement 17 durch Zufuhr von Luft aufbläst und durch Abfuhr von Luft zusammenzieht. Der Luftanschluß 29 ist über eine Leitung 30 beispielsweise mit dem Ansaugrohr 26, der Atmosphäre oder einer Saugseite 37 eines Turboladers 31 verbunden. Die Leitung 30 verzweigt sich beispielsweise und ist mit einem ersten Leitungsabschnitt 30.1 mit dem Ansaugrohr 26 und mit einem zweiten Leitungsabschnitt 30.2 mit der Atmosphäre oder mit der Saugseite 37 des Turboladers 31 verbunden. In dem ersten Leitungsabschnitt 30.1 und in dem zweiten Leitungsabschnitt 30.2 ist beispielsweise jeweils ein Belüftungsventil 33 angeordnet, so daß das Volumenänderungselement 17 wechselweise entweder über den ersten Leitungsabschnitt 30.1 bei geschlossenem zweiten Leitungsabschnitt 30.2 oder über den zweiten Leitungsabschnitt 30.2 bei geschlossenem ersten Leitungsabschnitt 30.1 belüftet oder entlüftet wird.

Wird das Volumenänderungselement 17 mit einer Unterdruckquelle, beispielsweise bei einem Unterdruck im Ansaugrohr 26 mit dem Ansaugrohr 26, verbunden, wird Luft aus dem Volumenänderungselement 17 über den Luftanschluß 29 und die Leitung 30 in das Ansaugrohr 26 gesaugt, so daß sich das Volumenänderungselement 17 zusammenzieht und sich der Strömungsquerschnitt des Strömungskanals 3 vergrößert. Das Volumenänderungselement 17 verringert sein Volumen auch, wenn es mit der Saugseite 37 des Turboladers 31 oder bei einem Überdruck im Volumenänderungselement 17 mit der Atmosphäre verbunden ist. Wird das Volumenänderungselement 17 mit einer Überdruckquelle, beispielsweise bei einem Überdruck im Ansaugrohr 26 auf der Druckseite des Turboladers 31 mit dem Ansaugrohr 26, verbunden, wird Luft aus dem Ansaugrohr 26 über die Leitung 30 in das Volumenänderungselement 17 gedrückt, so daß sich das Volumenänderungselement 17 ausdehnt und den Strömungsquerschnitt des Strömungskanals 3 verkleinert. Das Volumenänderungselement 17 vergrößert sein Volumen auch, wenn es bei einem Unterdruck im Volumenänderungselement 17 mit der Atmosphäre verbunden ist.

## Patentansprüche

1. Vorrichtung zur Abscheidung von Flüssigkeit aus einem Gasstrom mit zumindest einer einen schraubenlinienförmigen Strömungskanal aufweisenden Wendel, **dadurch gekennzeichnet, dass** der Strömungsquerschnitt des Strömungskanals (3) mittels eines im Strömungskanal (3) angeordneten Volumenänderungselements (17) stufenlos einstellbar ist.

2. Vorrichtung nach Anspruch 1, **dadurch gekennzeichnet, dass** das Volumenänderungselement (17) abhängig von einem Druck im Strömungskanal (3) sein Volumen verändert.

3. Vorrichtung nach Anspruch 1, **dadurch gekennzeichnet, dass** das Volumenänderungselement (17) sein Volumen bei einem steigenden Druck im Strömungskanal (3) verkleinert, wobei sich der Strömungsquerschnitt des Strömungskanals (3) vergrößert.

4. Vorrichtung nach Anspruch 1, **dadurch gekennzeichnet, dass** das Volumenänderungselement (17) sein Volumen bei einem sinkenden Druck im Strömungskanal (3) vergrößert, wobei sich der Strömungsquerschnitt des Strömungskanals (3) verkleinert.

5. Vorrichtung nach Anspruch 1, **dadurch gekennzeichnet, dass** die Vorrichtung ein Druckregelventil (24) aufweist und eine Motorsteuerung das Druckregelventil (24) derart ansteuert, dass sich ein vorbestimmter Druck im Strömungskanal (3) und ein vorbestimmter Strömungsquerschnitt des Strömungskanals (3) einstellt.

6. Vorrichtung nach Anspruch 1, **dadurch gekennzeichnet, dass** das Volumenänderungselement (17) im Strömungskanal (3) an einem Innenzylinder (5) der Wendel (2) oder am Innenumfang (8) eines topfförmigen Gehäuseteils (9) angeordnet ist.

7. Vorrichtung nach Anspruch 1, **dadurch gekennzeichnet, dass** das Volumenänderungselement (17) eine Hohlstruktur mit geschlossenen Poren (18) aufweist.

8. Vorrichtung nach Anspruch 1, **dadurch gekennzeichnet, dass** das Volumenanderungselement (17) als aufblasbarer elastischer Hohlkörper mit einem externen Luftanschluss (29) ausgeführt ist.

9. Vorrichtung nach Anspruch 8, **dadurch gekennzeichnet, dass** der externe Luftanschluss (29) mit einem Ansaugrohr (26) einer Brennkraftmaschine (27), mit einer Saugseite (37) oder Druckseite eines Turboladers (31) oder mit der Atmosphäre verbunden ist.

10. Vorrichtung nach Anspruch 1, **dadurch gekennzeichnet, dass** das Volumenanderungselement (17) aus Gummi hergestellt ist.

## Claims

1. Device for the separation of liquid from a gas stream, with at least one helix having a helical flow duct, **characterized in that** the flow cross section of the flow duct (3) can be set continuously by means of a volume-changing element (17) arranged in the flow duct (3).

2. Device according to Claim 1, **characterized in that** the volume-changing element (17) changes its volume as a function of a pressure in the flow duct (3).

3. Device according to Claim 1, **characterized in that** the volume-changing element (17) reduces its volume in the case of a rising pressure in the flow duct (3), the flow cross section of the flow duct (3) being enlarged.

4. Device according to Claim 1, **characterized in that** the volume-changing element (17) enlarges its volume in the case of a falling pressure in the flow duct (3), the flow cross section of the flow duct (3) being reduced.

5. Device according to Claim 1, **characterized in that** the device has a pressure-regulating valve (24), and a motor control activates the pressure-regulating valve (24) in such a way that a predetermined pressure in the flow duct (3) and a predetermined flow cross section of the flow duct (3) are set.

6. Device according to Claim 1, **characterized in that** the volume-changing element (17) is arranged in the flow duct (3) on an inner cylinder (5) of the helix (2) or on the inner circumference (8) of a pot-shaped housing part (9).

7. Device according to Claim 1, **characterized in that** the volume-changing element (17) has a hollow structure with closed pores (18).

8. Device according to Claim 1, **characterized in that** the volume-changing element (17) is designed as an inflatable elastic hollow body with an external air connection (29).

9. Device according to Claim 8, **characterized in that** the external air connection (29) is connected to an intake pipe (26) of an internal combustion engine (27), to a suction side (37) or delivery side of a turbocharger (31) or to the atmosphere.

10. Device according to Claim 1, **characterized in that** the volume-changing element (17) is produced from rubber.

## Revendications

1. Dispositif de séparation de liquide d'un flux de gaz comportant au moins une hélice présentant un canal d'écoulement hélicoïdal,
**caractérisé en ce que**
la section d'écoulement du canal d'écoulement (3) peut être ajustée en continu au moyen d'un élément de modification du volume (17) disposé dans le canal d'écoulement (3).

2. Dispositif selon la revendication 1,
**caractérisé en ce que**
l'élément de modification du volume (17) modifie son volume en fonction d'une pression dans le canal d'écoulement (3).

3. Dispositif selon la revendication 1,
**caractérisé en ce que**
l'élément de modification du volume (17) réduit son volume lorsque la pression augmente dans le canal d'écoulement, et la section d'écoulement du canal d'écoulement (3) augmente.

4. Dispositif selon la revendication 1,
**caractérisé en ce que**
l'élément de modification du volume (17) augmente son volume lorsque la pression baisse dans le canal d'écoulement (3), et la section d'écoulement du canal d'écoulement (3) diminue.

5. Dispositif selon la revendication 1,
**caractérisé en ce que**
le dispositif présente un régulateur de pression (24) et une commande de moteur amorce le régulateur de pression (24) de manière à établir une pression prédéfinie dans le canal d'écoulement (3) et à ajuster une section d'écoulement prédéfinie du canal d'écoulement (3).

6. Dispositif selon la revendication 1,
**caractérisé en ce que**
l'élément de modification du volume (17) est disposé dans le canal d'écoulement (3) sur un cylindre interne (5) de l'hélice (2) ou à la périphérie interne (8) d'une partie du boîtier en forme de creuset (9).

7. Dispositif selon la revendication 1,
**caractérisé en ce que**
l'élément de modification du volume (17) présente une structure creuse comportant des pores fermés (18).

8. Dispositif selon la revendication 1,
**caractérisé en ce que**
l'élément de modification du volume (17) est réalisé en forme de corps creux élastique gonflable comportant un raccord d'air externe (29).

9. Dispositif selon la revendication 8,
**caractérisé en ce que**
le raccord d'air externe (29) est relié à un tube d'aspiration (26) d'un moteur à combustion interne (27), comportant un côté admission (37) ou un côté refoulement d'un turbocompresseur (31), ou bien à l'atmosphère.

10. Dispositif selon la revendication 1,
**caractérisé en ce que**
l'élément de modification du volume (17) est en caoutchouc.
